# EUROPEAN PATENT SPECIFICATION

(11) **EP 2 958 165 B1**
(45) Date of publication and mention of the grant of the patent: **20.09.2017**
(21) Application number: 13874873.6
(22) Date of filing: 15.02.2013
(51) Int. Cl.: H01M 2/10, H01M 10/04

(54) **SECONDARY BATTERY MODULE**
SEKUNDÄRBATTERIEMODUL
MODULE DE BATTERIE SECONDAIRE

(43) Date of publication of application: 23.12.2015
(73) Proprietor: Hitachi Automotive Systems, Ltd., Hitachinaka-shi Ibaraki 312-8503 (JP)
(72) Inventor: AOKI, Sadayuki, Hitachinaka-shi Ibaraki 312-8505 (JP)
(74) Representative: MERH-IP Matias Erny Reichl Hoffmann Patentanwälte PartG mbB
(86) International application number: PCT/JP2013/053615
(87) International publication number: WO 2014/125605

(56) References cited:
- JP-A- 2009 081 056
- JP-A- 2009 200 051
- JP-A- 2010 009 989
- JP-A- 2011 023 302
- JP-A- 2011 228 306
- JP-A- 2012 221 689
- JP-A- 2013 501 333
- US-A1- 2010 190 049
- US-A1- 2011 262 797

## Description

### TECHNICAL FIELD

The present invention relates to a secondary battery module that is equipped with a plurality of battery cells and is capable of releasing and accumulating electric energy.

### BACKGROUND ART

PTL 1 describes a structure in which a battery stacked body and an elastic body are placed in a space composed of a combination of an L-shaped first frame and an L-shaped second frame.

### CITATION LIST

### PATENT LITERATURE

PTL 1: Japanese Patent Application Laid-Open Publication No. 2012-160347

In US 2010/190049 A1 a battery assembly manufacturing method is described. Said method includes a step of measuring a stacking direction length of a stacked body including a predetermined number of unit cells constituting a battery assembly and arranged in the stacking direction; and a step of bundling a body is provided. The body to be bundled is provided with length adjustment means for converging a spread in stacking direction length.

In US 2011/262797 A1 a battery module, a battery pack, and an electric vehicle is described. The battery module includes a plurality of unit battery cells, a pair of end plates coupled together in a spaced relationship for receiving the unit battery cells therebetween, and a pressure control unit between the unit battery cells and at least one end plate.

In JP 2009081056 A a battery module is provided with a laminate in which battery cells, battery holders and an end plate are laminated. A binding band for binding the laminate in lamination direction is also provided and a plurality of elastic members having an elasticity are suggested. The elastic members are arranged inside the laminate of the battery cells, battery holders and the end plate.

In JP2010009989 A a charge/discharge method of a secondary battery is described. The secondary battery has an outer shape having facing surfaces and being pressurized at the facing surfaces in a charge/discharge state and a pressurizing force is made weaker when not charged and discharged.

### SUMMARY OF INVENTION

### TECHNICAL PROBLEM

A secondary battery module described in PTL 1 is configured so that a plurality of prismatic secondary batteries in a stacked state and the elastic body are fastened and secured by the pair of frames. Therefore, there is a possibility that dimensional accuracy of the batteries in a stacked direction may deteriorate, which may result in ununiform pressing loads of the elastic body.

### SOLUTION TO PROBLEM

To solve the problems the features of the independent claims are suggested. Preferred developments are in the dependent claims. A secondary battery module according to a first aspect comprises: a battery stacked body configured by stacking and placing a plurality of secondary batteries, each having a flat rectangular battery container, so that wide side faces of the secondary batteries, having a large area among side faces of the secondary batteries, are placed opposite each other; a pair of end plates that is respectively disposed at one stacked-direction side of the battery stacked body and at another stacked-direction side of the battery stacked body so as to face opposite each other; a pair of side frames that is respectively disposed at one cell-width-direction side and at another cell-width-direction side so as to face opposite each other, a cell width direction being perpendicular to a stacked direction of the battery stacked body, and one ends of the side frames on the one cell-width-direction side and the other cell-width-direction side engaging with an end plate on the one stacked-direction side and other ends of the side frames engaging with an end plate on the other stacked-direction side; and an elastic body that is placed between an end surface of the battery stacked body on the one stacked-direction side and the end plate on the one stacked-direction side and presses the battery stacked body in the stacked direction.

### ADVANTAGEOUS EFFECTS OF INVENTION

Good dimensional accuracy can be obtained and variations of the pressing loads acting from the elastic body on the secondary batteries can be suppressed according to the present invention.

### BRIEF DESCRIPTION OF DRAWINGS

[Fig. 1] Fig. 1 is a perspective view illustrating the appearance of a secondary battery module according to a first embodiment;
[Fig. 2] Fig. 2 is a perspective view illustrating a state in which side frames are removed from the secondary battery module according to the first embodiment;
[Fig. 3] Fig. 3 is a perspective view illustrating the configuration of the secondary battery module according to the first embodiment;
[Fig. 4] Fig. 4 is a plan view of the secondary battery module according to the first embodiment;
[Fig. 5] Fig. 5 is a perspective view of a prismatic cell;
[Fig. 6] Fig. 6 is perspective views of end plates;
[Fig. 7] Fig. 7 is a perspective view of the side frame;
[Fig. 8] Fig. 8 is a perspective view of an end cell holder;
[Fig. 9] Fig. 9 is a perspective view illustrating a plate spring provided in the secondary battery module according to the first embodiment;
[Fig. 10] Fig. 10 is schematic diagrams illustrating positions, which are pressed by the plate spring, on a wide side face of a prismatic cell; and Fig. 10(a) is a schematic diagram illustrating a mode for pressing at a first posture and Fig. 10(b) is a schematic diagram illustrating a mode for pressing at a second posture;
[Fig. 11] Fig. 11 is explanatory diagrams that compare the mode for pressing at the first posture with the mode for pressing at the second posture;
[Fig. 12] Fig. 12(a) is a perspective view illustrating a plate assembly provided in a secondary battery module according to a second embodiment and Fig. 12(b) is a perspective view of a plate spring assembly provided in a secondary battery module according to a variation of the second embodiment;
[Fig. 13] Fig. 13(a) is a perspective view illustrating a plate spring to be combined in Fig. 12(a) and Fig. 13(b) is a perspective view illustrating a spring to be combined in Fig. 12(b);
[Fig. 14] Fig. 14(a) is a schematic diagram illustrating pressed positions of the plate spring assembly in Fig. 12(a) and Fig. 14(b) is a schematic diagram illustrating pressed positions of the plate spring assembly in Fig. 12(b); and
[Fig. 15] Fig. 15 is schematic diagrams illustrating plate springs provided in a secondary battery module according to variations.

### DESCRIPTION OF EMBODIMENTS

Embodiments in which the present invention is applied to a secondary battery module equipped with a plurality of flat rectangular lithium ion secondary batteries (hereinafter referred to as prismatic cells) will be explained below with reference to drawings.

### First Embodiment

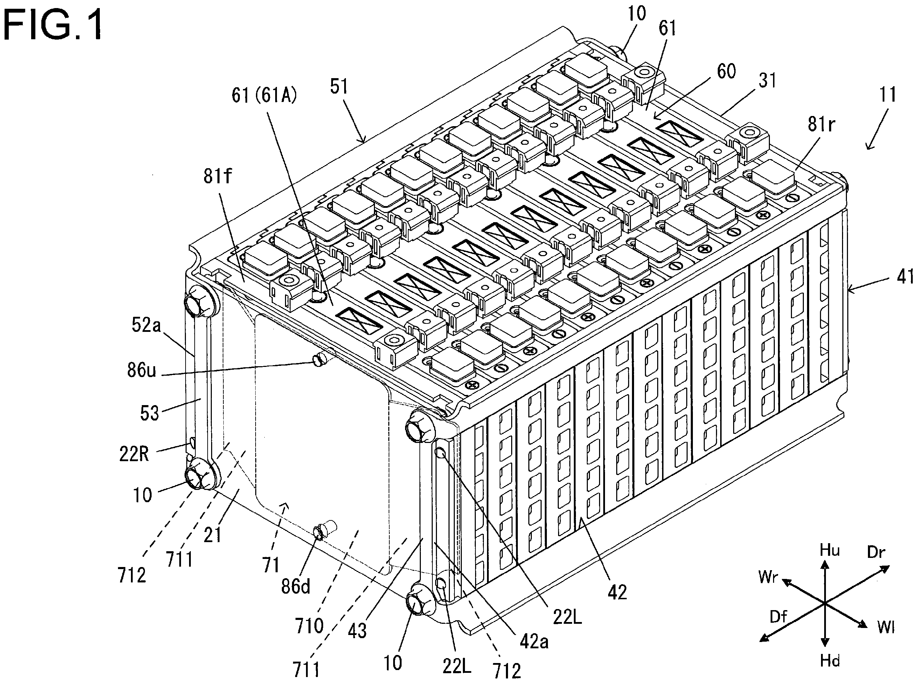

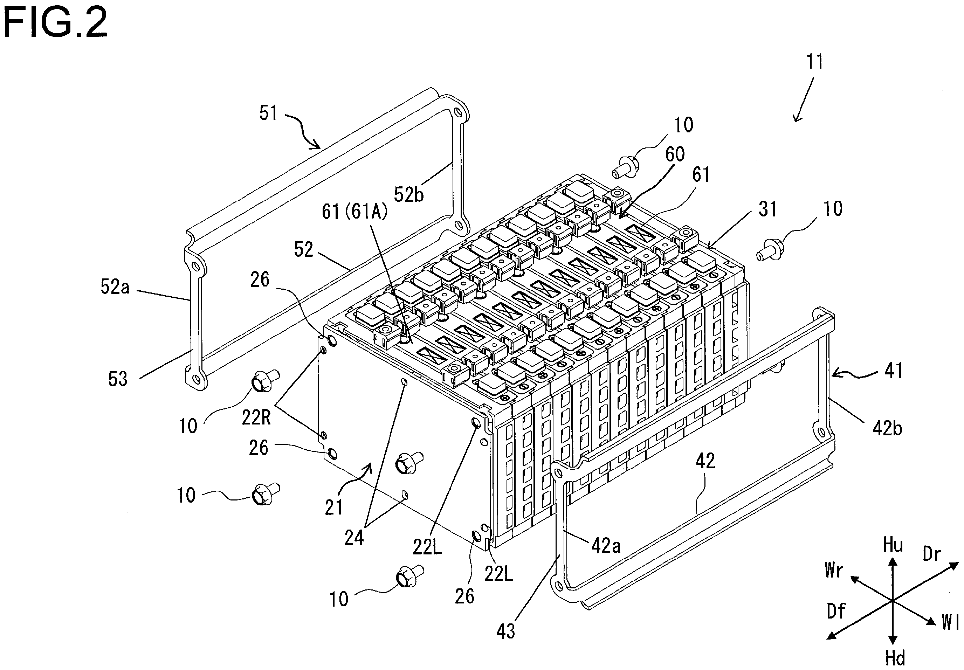

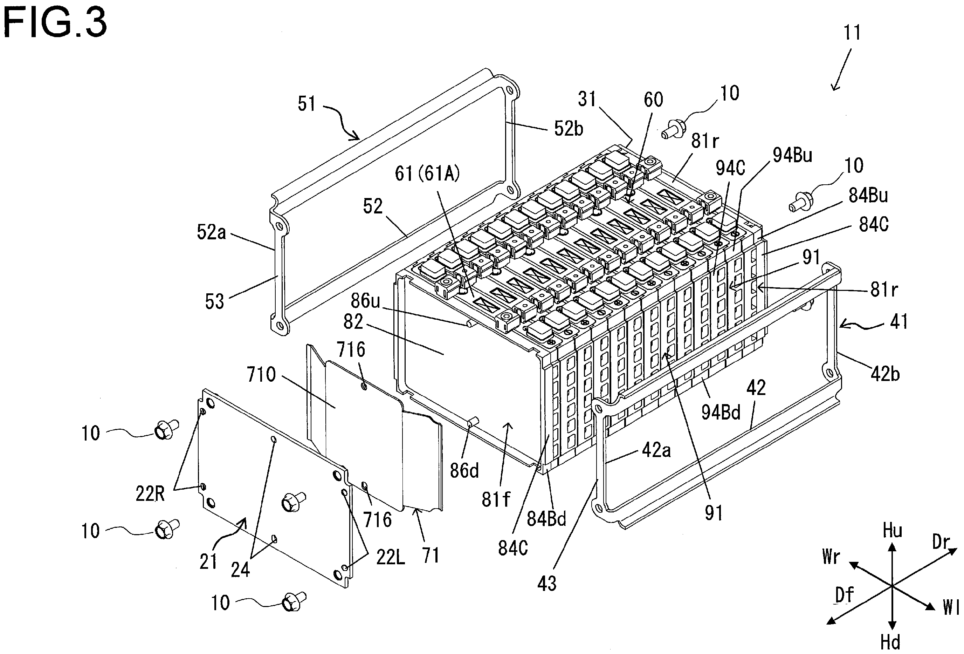

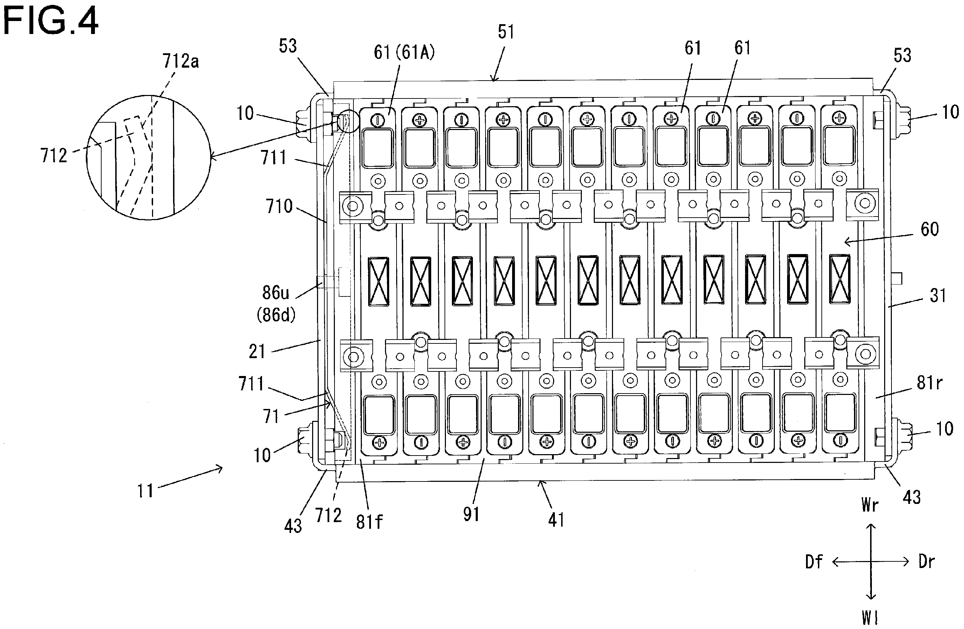

Fig. 1 is a perspective view illustrating the appearance of a secondary battery module 11 according to a first embodiment and Fig. 2 is a perspective view illustrating a state in which side frames 41 and 51 are removed from the secondary battery module 11. Fig. 3 is a perspective view illustrating the configuration of the secondary battery module 11 and Fig. 4 is a plan view of the secondary battery module 11.

The secondary battery module 11 is configured by including a plurality of prismatic cells 61, cell holders, each of which holds a prismatic cell 61, a pair of end plates 21 and 31, and a pair of side frames 41 and 51 as illustrated in Fig. 1 to Fig. 4.

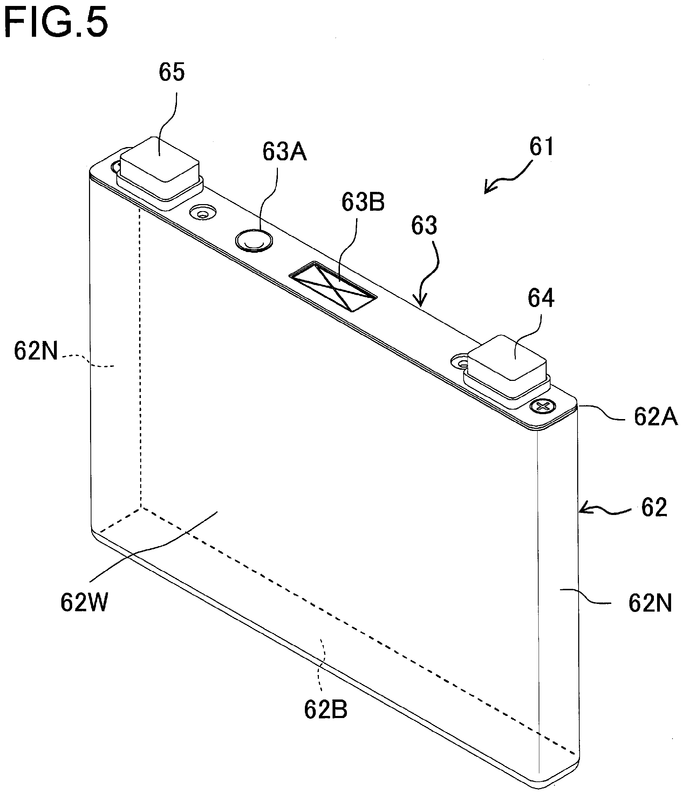

Fig. 5 is a perspective view illustrating the appearance of a prismatic cell 61. The prismatic cell 61 includes a battery container composed of a rectangular-parallelepiped-shaped battery case 62 and a rectangular-flat-plate-shaped battery lid 63 and is configured so that a charging and discharging element is placed in the battery case 62 via an insulating case and an opening 62A in the battery case 62 is sealed with the battery lid 63. A positive terminal 64 and a negative terminal 65 protrude from the battery lid 63. The positive terminal 64 and the negative terminal 65 are terminals that output to an exterior electric power generated by the charging and discharging element in the battery case 62 and charge the charging and discharging element with electric power generated at the exterior.

The battery case 62 is made of metal and is formed by a deep drawing method in a manner such that a depth dimension of the case is longer than a short-side dimension of the opening. The battery case 62 is a bottomed, rectangular-parallelepiped shaped flat container, is composed of wide side faces 62W having a large area, narrow side faces 62N having a small area, and a bottom face (case bottom face) 62B which is a container bottom, and has the opening 62A in its top face.

The battery lid 63 is secured to the opening 62A in the battery case 62 by a laser beam welding method. The battery lid 63 has through-holes through which the positive terminal 64 and the negative terminal 65 are inserted, respectively. The battery lid 63 is provided with an electrolyte filling hole 63A and a safety valve 63B. After an electrolyte is injected into the battery case 62, the electrolyte filling hole 63A is sealed by welding an electrolyte filling plug with a laser beam. When the pressure within the battery case 62 rises to a predetermined value or higher, the safety valve 63B breaks and releases the pressure within the battery case 62.

The plurality of prismatic cells 61 constitute a battery stacked body 60 as the prismatic cells 61 are stacked and placed with their wide side faces 62W opposite each other as illustrated in Fig. 1 to Fig. 4. The plurality of prismatic cells 61 constituting the battery stacked body 60 are bound in the stacked state by a pair of end plates 21 and 31 and a pair of side frames 41 and 51. The pair of end plates 21 and 31 is placed facing opposite each other in such a manner that the end plate 21 is located on one side Df of a direction in which the prismatic cells of the battery stacked body 60 are stacked and the end plate 31 is located on the other side Dr. The pair of side frames 41 and 51 is placed facing opposite each other in such a manner that they are located, respectively, on one side W1 and the other side Wr of a cell width direction which is perpendicular to the stacked direction of the battery stacked body 60. Regarding the pair of side frames 41 and 51 on one cell-width-direction side W1 and the other cell-width-direction side Wr, one end of each side frame 41 or 51 engages with the end plate 21 on one stacked-direction side Df and the other end of each side frame 41 or 51 engages with the end plate 31 on the other stacked-direction side Dr.

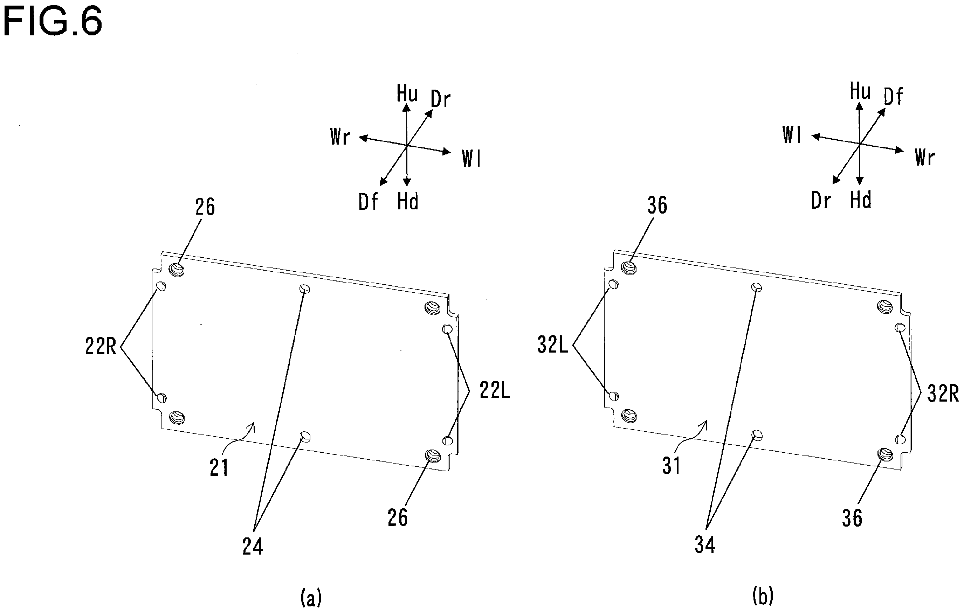

The structure of the end plates 21 and 31 will be explained with reference to Fig. 2, Fig. 3, and Fig. 6. Fig. 6 shows perspective views of the end plates 21 and 31. The end plate 21 on one stacked-direction side Df and the end plate 31 on the other stacked-direction side Dr have the same structure.

Each end plate 21 or 31 is of a rectangular flat plate shape with a predetermined plate thickness and of a substantially the same size as that of an end surface of the battery stacked body 60 in the stacked direction. An outside surface of the end plate 21 is provided with protrusions 22L protruding towards one stacked-direction side Df at an end of the end plate 21 on one cell-width-direction side W1 and at both ends of cell-height-direction, and protrusions 22R protruding towards one stacked-direction side Df at an end the end plate 21 on the other cell-width-direction side Wr and at both ends of cell-height-direction. Similarly, an outside surface of the end plate 31 is provided with protrusions 32L protruding towards the other stacked-direction side Dr at an end of the end plate 31 on one cell-width-direction side W1 and at both ends of the cell-height-direction, and protrusions 32R protruding towards the other stacked-direction side Dr at an end of the end plate 31 on the other cell-width-direction side Wr and at both ends of the cell-height-direction.

The protrusion 22L or 32L is of a cylindrical shape having substantially the same protrusion dimension as a plate thickness of the side frame 41. The protrusion 22R or 32R is of a cylindrical shape having substantially the same protrusion dimension as a plate thickness of the side frame 51.

The protrusion 22L or 32L and the protrusion 22R or 32R may be of a cube shape. Incidentally, an end of each protrusion 22L, 32L, 22R, or 32R should preferably be inclined so that an end edge 42a, 42b, 52a, or 52b of an opening in the side frame 41 or 51 described later can be easily inserted.

The end plate 21 is provided with pin holes 24 and screw holes (fastener holes) 26 as illustrated in Fig. 2 and Fig. 6. Similarly, the end plate 31 is provided with pin holes 34 and screw holes (fastener holes) 36. The screw hole 26 or 36 is used to fasten a fixing screw 10 for securing the side frame 41 or 51 to the end plate 21 or 32. The screw holes 26 are formed at four corners of the end plate 21 and the screw holes 36 are formed at four corners of the end plate 31.

The pin hole 24 is a through-hole into which a guide pin 86u or 86d of an end cell holder 81f described later is inserted. The pin holes 24 are formed, one pin hole 24 at each end of the cell-height-direction in a central position of the end plate 21 along the cell width direction. Similarly, the pin hole 34 is a through-hole into which the guide pin 86u or 86d of an end cell holder 81r described later is inserted. The pin holes 34 are formed, one pin hole 34 at each end of the cell-height-direction in a central position of the end plate 31 along the cell width direction. Incidentally, when the guide pins 86u and 86d of the end cell holder 81r are omitted as described later, the pin holes 34 can be omitted.

The side frame 41 on one cell-width-direction side W1 has an opening 42 that opens between the protrusions 22L of the end plate 21 on one stacked-direction side Df (see Fig. 2 and Fig. 6(a)) and the protrusions 32L of the end plate 31 on the other stacked-direction side Dr (see Fig. 6(b)), and into which the protrusions 22L and 32L of each end plate 21 and 31 on one cell-width-direction side W1 are inserted respectively as illustrated in Fig. 1 to Fig. 3.

Similarly, the side frame 51 on the other cell-width-direction side Wr has an opening 52 that opens between the protrusions 22R of the end plate 21 on one stacked-direction side Df (see Fig. 2 and Fig. 6(a)) and the protrusions 32R on the other cell-width-direction side Wr of the end plate 31 on the other stacked-direction side Dr (see Fig. 6(b)), and into which the protrusions 22R and 32R of each end plate 21 and 31 on the other cell-width-direction side Wr are inserted.

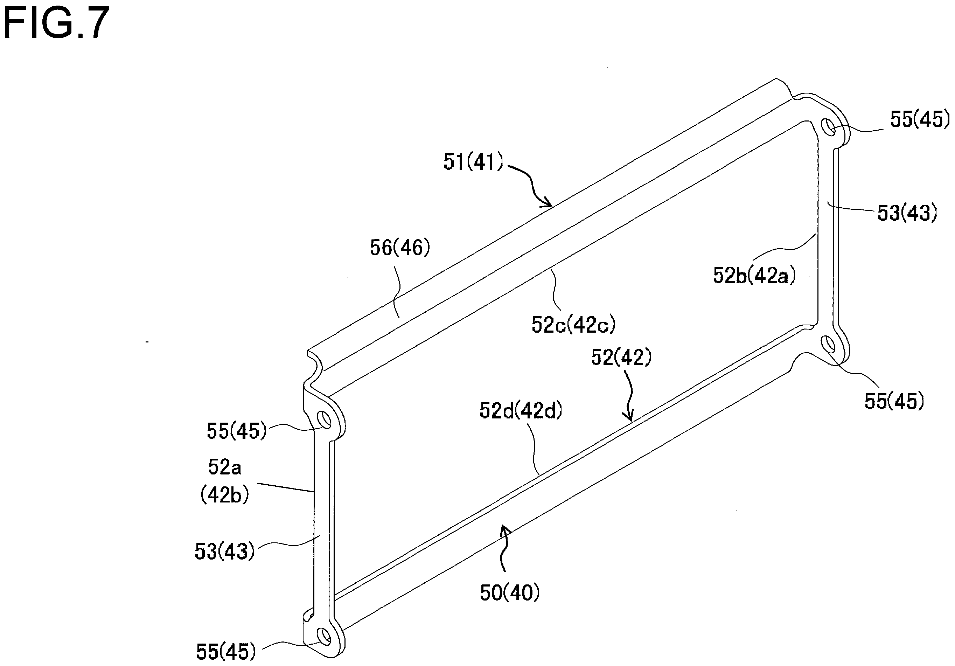

The structure of the side frame 41 or 51 will be explained with reference to Fig. 7. Fig. 7 is a perspective view of the side frame 51 (41). Incidentally, the following description will explain only the structure of the side frame 51. Since the structure of the side frame 41 is the same as that of the side frame 51, any detailed description of the structure of the side frame 41 will be omitted by indicating reference numerals of corresponding components in parentheses.

The side frame 51 (41) is composed of a flat plate of a substantially rectangular shape in planar view that is placed opposite, and in contact with, an end surface of the battery stacked body 60 in the cell-width-direction. The side frame 51 (41) has a constant height dimension substantially the same as a cell height dimension of the battery stacked body 60 and is of a size extending between the pair of end plates 21 and 31.

The side frame 51 (41) includes: a flat plate part 50 (40) having a rectangular flat plate shape in contact with cell holders; flanges 53 (43) formed by bending both lengthwise ends of the flat plate part 50 (40) at a 90-degree angle inwardly in the cell width direction; and ribs 56 (46) formed by bending both widthwise ends of the flat plate part 50 (40) at a 90-degree angle externally in the cell width direction. According to circumstances, no rib 56 (46) may be provided.

The side frame 51 (41) has an opening 52 (42) that opens from its one end to the other end in a constant height dimension. The opening 52 (42) opens from one flange 53 (43) to the other flange 53 (43) according to the shape of the side frame 51 (41) so that the end surface of the battery stacked body 60 on the other cell-width-direction side Wr can be exposed.

The opening 52 (42) includes: an upper edge 52c (42c) and lower edge 52d (42d) formed from the flat plate part 50 (40) to extend to the flanges 53 (43); and end edges 52a (42b) and 52b (42a) formed on the pair of flanges 53 (43). The upper edge 52c (42c) and the lower edge 52d (42d) extend in parallel with each other from one end to the other end. The end edge 52a (42b) and the end edge 52b (42a) extend in parallel with each other along the cell height direction at one end and the other end.

The pair of end edges 52a and 52b of the opening 52 are placed opposite each other in contact with cell-width-direction inside positions of the protrusions 22R and 32R on the other cell-width-direction side Wr of the end plates 21 and 31. The pair of end edges 42a and 42b of the opening 42 are placed opposite each other in contact with cell-width-direction inside positions of the protrusions 22L and 32L on one cell-width-direction side W1 of the end plates 21 and 31.

The pair of flanges 53 (43) is configured so that the flanges 53 (43) are bent in the same direction at both one end and the other end of the side frame 51 (41) and are placed opposite an outside end surface of the end plate 21 on one stacked-direction side Df and an outside end surface of the end plate 31 on the other stacked-direction side Dr, respectively.

Through-holes 55 (45) through which fixing screws (fastening members) 10 are inserted are formed in each flange 53 (43). The through-holes 55 (45) are configured so that the through-holes 55 (45) are placed over the screw holes 26 or 36 in the end plates 21 and 31 in a state where the side frame 51 (41) is attached; and the fixing screws 10 can be inserted from outside the stacked direction and screwed into the screw holes 26 and 36. Incidentally, the side frames 51 and 41 can be fastened and secured by using, for example, bolts, rivets, or swaging instead of using the fixing screws 10.

The pair of ribs 56 (46) extends along the upper end and lower end of the side frame 51 (41) and a section of the pair of ribs 56 (46) is of a substantially U shape as seen from one stacked-direction side Df. The pair of ribs 56 (46) can enhance rigidity of the side frame 51 (41) and prevent deformation of the side frame 51 (41). Therefore, it is possible to prevent disengagement of the side frame 51 (41) from the protrusions 22R (22L) and 32R (32L) of the end plates 21 and 31 due to, for example, distortion of the side frame 51 (41).

The battery stacked body 60 is placed between the end plate 21 and the end plate 31 and a plate spring 71 described below is placed between the end plate 21 and the battery stacked body 60 as illustrated in Fig. 1 and Fig. 3. The plate spring 71 is placed in an elastically deformed state so as to be compressed and applies a pressing force in the stacked direction to separate the end plate 21 from the battery stacked body 60. The flanges 43 at both ends of the side frame 41 and the flanges 53 at both ends of the side frame 51 regulates a stacked-direction dimension of the end plates 21 and 31. Therefore, the stacked-direction dimension of the secondary battery module 11 is determined by dimensions between the flanges 43 of the side frame 41 and dimensions between the flanges 53 of the side frame 51.

Specifically speaking, as the side frames 41 and 51 are attached to the end plates 21 and 31, the pressing force applied by the plate spring 71 in the stacked direction controls movements of the end plate 21 and the end plate 31 in directions separating from the stacked direction and the battery stacked body 60 is securely bound from both stacked-direction sides.

Referring to Fig. 3, the plurality of cell holders include: a pair of end cell holders 81f and 81r, each of which is interposed between the end plate 21 or 31 and a prismatic cell 61; and intermediate cell holders 91, each of which is interposed between a prismatic cell 61 on one stacked-direction side Df and a prismatic cell 61 on the other stacked-direction side Dr, wherein a plurality of intermediate cell holders 91 can be connected in the stacked direction between the pair of end cell holders 81f and 81r. The prismatic cells 61 are retained in a state held by both stacked-direction sides by connecting the end cell holder 81f or 81r and the intermediate cell holder 91 and connecting the intermediate cell holders 91.

The end cell holder 81f or 81r has protruding parts 84C, each of which is inserted into each opening 42 or 52 of the pair of side frames 41 and 51 on one cell-width-direction side W1 and the other cell-width-direction side Wr of the battery stacked body 60 and engages with the pair of side frames 41 and 51. The protruding part 84C is formed at a cell-height-direction central position, and contact surfaces 84Bu and 84Bd that are brought into contact with the flat plate part 40 or 50 of the side frame 41 or 51 are provided on one cell-height-direction side Hu and the other cell-height-direction side Hd of the protruding part 84C, respectively.

Each intermediate cell holder 91 has a protruding part 94C which is inserted into each opening 42 or 52 of the pair of side frames 41 and 51 on one cell-width-direction side W1 and the other cell-width-direction side Wr of the battery stacked body 60 and engages with the pair of side frames 41 and 51. The protruding part 94C is formed at a cell-height-direction central position, and contact surfaces 94Bu and 94Bd that are brought into contact with the flat plate part 40 or 50 of the side frame 41 or 51 are provided on one cell-height-direction side Hu and the other cell-height-direction side Hd of the protruding part 94C, respectively.

As the contact surfaces 84Bu and 84Bd are brought into contact with the side frames 41 and 51, they control movements of the end cell holders 81f and 81r in the cell width direction. As the contact surfaces 94Bu and 94Bd are brought into contact with the side frames 41 and 51, they control movements of the intermediate cell holders 91 in the cell width direction.

The protruding parts 84C are inserted into the openings 42 and 52 of the side frames 41 and 51, an upper end of each protruding part 84C is placed opposite the upper end 42c or 52c of the opening 42 or 52, and a lower end of each protruding part 84C is placed opposite the lower end 42d or 52d of the opening 42 or 52, thereby controlling movements of the end cell holder 81f or 81r in the cell height direction.

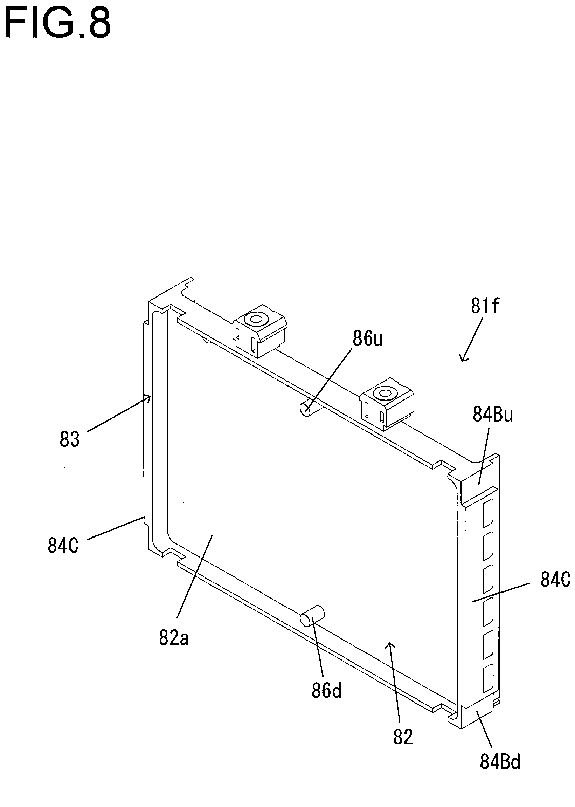

Fig. 8 is a perspective view of the end cell holder 81f on one stacked-direction side Df. The end cell holder 81f has a contact part 82 to be brought into contact with the wide side face 62W of the prismatic cell 61. A frame part 83 that stands perpendicularly from the contact part 82 is formed around the contact part 82. The aforementioned protruding parts 84C and contact surfaces 84Bu and 84Bd are formed on side faces of both cell-width-direction ends of the frame part 83.

One surface of the contact part 82 is a contact face to be brought into contact with the wide side face 62W of the prismatic cell 61 and the other surface of the contact part 82 is a spring-receiving face 82a to be brought into contact with the plate spring 71. A pair of guide pins 86u and 86d is formed on the spring-receiving face 82a. The pair of guide pins 86u and 86d is separated from each other in the cell height direction and each guide pin 86u or 86d protrudes to extend in the stacked direction.

The end cell holder 81r on the other stacked-direction side Dr has the same structure as that of the end cell holder 81f on one stacked-direction side Df. Since the plate spring 71 is not placed between the end cell holder 81r on the other stacked-direction side Dr and the end plate 31, the guide pins 86u and 86d may be omitted. Incidentally, it is preferable to provide the guide pins 86u and 86d because when the guide pins 86u and 86d are provided, the end plate 31 can be easily positioned by inserting the guide pins 86u and 86d into the pin holes 34 in the end plate 31.

The plate spring 71 is placed between the end surface of the battery stacked body 60 on one stacked-direction side Df and the end plate 21 on one stacked-direction side Df as illustrated in Fig. 1, Fig. 3, and Fig. 4. The plate spring 71 is an elastic body that applies an elastic force to the prismatic cell 61 via the end cell holder 81f and presses the battery stacked body 60 in the stacked direction.

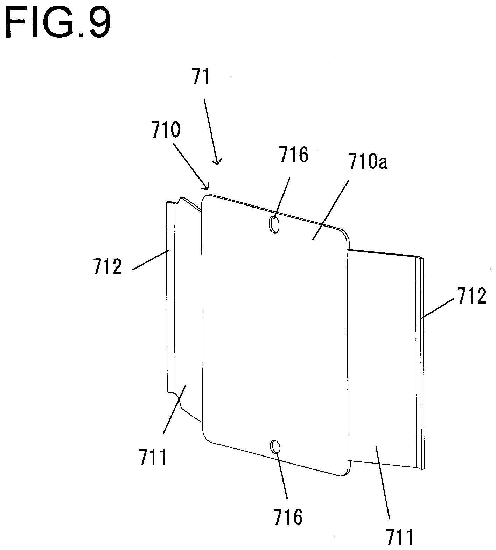

Fig. 9 is a perspective view of the plate spring 71 provided in the secondary battery module according to the first embodiment. The plate spring 71 includes a flat plate part 710 made of a metallic material and having a rectangular flat plate shape, a pair of inclined parts 711 extending from both cell-width-direction ends of the flat plate 710 and bending ends 712 formed respectively at the ends of the inclined parts 711 constituting a pair, as illustrated in Fig. 1 and Fig. 9.

One surface of the flat plate part 710 is a flat contact face 710a to be brought into contact with the end surface of the end plate 21. A pair of pin holes 716 through which the guide pins 86u and 86d of the aforementioned end cell holder 81f are inserted is formed, one pin hole 716 at each of both cell-height-direction ends of a cell-width-direction central position of the flat plate part 710.

Referring to Fig. 4 and Fig. 9, each of the pair of the inclined parts 711 bends from both cell-width-direction edges of the flat plate part 710 towards the other stacked-direction side Dr and extends to be inclined relative to the flat plate part 710. The pair of inclined parts 711 is inclined to widen a distance in the cell width direction between the inclined parts 711 towards their top ends in planar view as illustrated in Fig. 4.

The top end of each inclined part 711 is bent towards one stacked-direction side Df, thereby forming a bending end 712. A pair of bending ends 712 is provided along the narrow side face 62N, that is, in parallel with the cell height direction. Referring to Fig. 4, a surface of the bending end 712 on the other stacked-direction side Dr is formed as a curved contact face 712a to be brought into contact with the end cell holder 81f.

The plate spring 71 is placed in an elastically deformed state, that is, in a compressed state so as to reduce a stacked-direction distance between the flat plate part 710 and the bending ends 712, thereby generating an elastic force in a direction to separate the end plate 21 from the end cell holder 81f. The elastic force of the plate spring 71 is transmitted to a prismatic cell 61 located at an outermost position on one stacked-direction side Df, among a plurality of prismatic cells 61 constituting the battery stacked body 60, via the end cell holder 81f. The prismatic cell 61 located at the outermost position on one stacked-direction side Df will be hereinafter referred to as the first prismatic cell 61A.

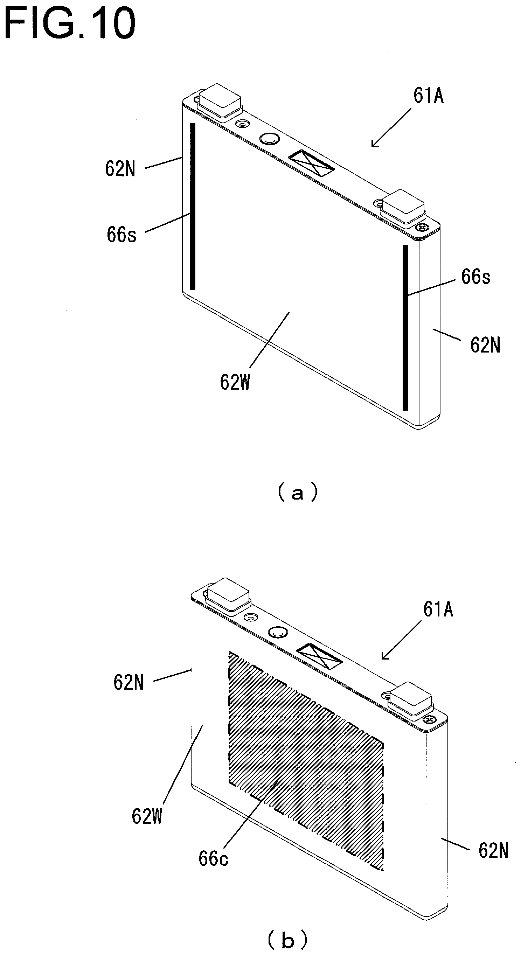

The end cell holder 81f is made of a resin material; and when the end cell holder 81f is pressed by the curved contact faces 712a of the bending ends 712, its pressed portions, that is, portions near both cell-width-direction ends of the end cell holder 81f elastically deform as if they expand towards the other stacked-direction side Dr. As a result, the elastic force of the plate spring 71 is transmitted via the end cell holder 81f to two positions near both cell-width-direction ends of the wide side face 62W of the first prismatic cell 61A (see Fig. 10(a)).

Fig. 10 shows a schematic illustration of pressed positions 66s on the wide side face 62W of the first prismatic cell 61A pressed by the plate spring 71. The positions 66s pressed by the plate spring 71 illustrated in Fig. 9 are near the corners (both cell-width-direction ends) of the cell container on the wide side face 62W of the first prismatic cell 61A as illustrated in Fig. 10(a) as explained above.

Incidentally, in this embodiment, the pressed positions can be changed by turning the plate spring 71 around and setting it. At a first posture as illustrated in Fig. 1 where the flat plate part 710 is in contact with the end plate 21 and the bending ends 712 are in contact with the end cell holder 81f, the pressed positions 66s on the first prismatic cell 61A are as illustrated in Fig. 10(a). The pressed positions 66s at the first posture should preferably be set between the respective narrow side faces 62N and the charging and discharging element when the wide side face 62W is seen from the front, in consideration of the position of the charging and discharging element to be placed within the battery container.

On the other hand, at a second posture where the plate spring 71 is turned 180 degrees around an axis parallel to the cell height direction and the flat plate part 710 is brought into contact with the end cell holder 81f and the bending ends 712 are brought into contact with the end plate 21, a pressed position 66c on the wide side face 62W pressed by the plate spring 71 is located at a central portion of the wide side face 62W excluding the portions near the corners of the battery container as illustrated in Fig. 10(b).

Accordingly, the plate spring 71 is configured so that it can be set in either a mode for pressing at the first posture or a mode for pressing at the second posture which is different from the first posture; and at the second posture, the plate spring 71 applies the elastic force to the battery stacked body 60 at a position different from the first posture.

A proper elastic force can be applied according to deformability of the battery container of the prismatic cell 61 by making it possible to change the position(s) to be pressed. Advantages of the ability to change the pressed position(s) will be explained specifically below.

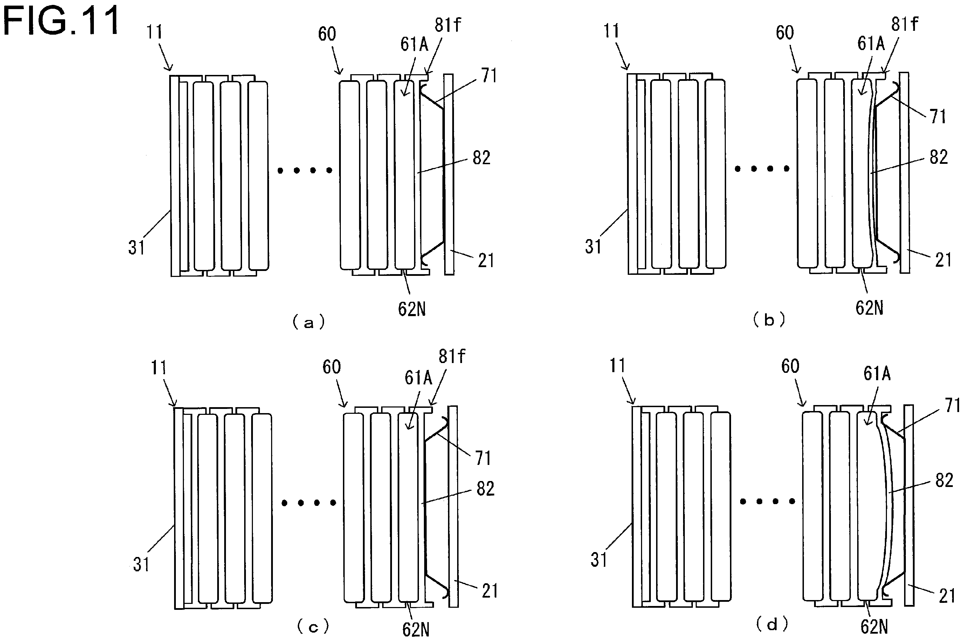

Fig. 11 is an explanatory diagram that compares the mode for pressing at the first posture with the mode for pressing at the second posture. Some prismatic cells 61 tend to easily expand due to charging and discharging, while some prismatic cells 61 hardly expand due to charging and discharging. Fig. 11(a) is a diagrammatic illustration of when the battery stacked body 60 composed of the prismatic cells 61 which hardly expand due to charging and discharging is pressed at the first position; and Fig. 11(b) is a diagrammatic illustration of when the battery stacked body 60 composed of the prismatic cells 61 which hardly expand due to charging and discharging is pressed at the second posture. Fig. 11(c) is a diagrammatic illustration of when the battery stacked body 60 composed of the prismatic cells 61 which tend to easily expand due to charging and discharging is pressed at the second posture; and Fig. 11(d) is a diagrammatic illustration of when the battery stacked body 60 composed of the prismatic cells 61 which tend to easily expand due to charging and discharging is pressed at the first posture.

Pressing loads of the plate spring 71 acting on the wide side face 62W of the first prismatic cell 61A are received by side plates constituting the narrow side faces 62N. Accordingly, when the pressing loads are applied to the prismatic cells 61 which hardly expand due to charging and discharging, as the pressed positions are closer to the side plates constituting the narrow side faces 62N which serve as supporting points for the wide side face 62W, a deflection amount can be suppressed.

Therefore, when the portions of the wide side face 62W of the first prismatic cell 61A near the corners of the battery container are pressed as illustrated in Fig. 11(a), deformation of the battery container of the first prismatic cell 61A is prevented, the shape of the first prismatic cell 61A is kept equal to that of other prismatic cells 61, and the battery stacked body 60 is pressed uniformly.

On the other hand, when the central portion of the wide side face 62W of the first prismatic cell 61A excluding the portions near the corners of the battery container is pressed as illustrated in Fig. 11(b), there is a possibility that the pressed portion might deform to sag downwards in a cell thickness direction (the stacked direction), thereby causing deterioration of life time of the battery.

Therefore, when the pressing loads are applied to the battery stacked body 60 composed of the prismatic cells 61 which hardly expand due to charging and discharging, a proper pressing force can be applied to the battery stacked body 60 by adopting the mode for pressing at the first posture (see Fig. 10(a) and Fig. 11(a)).

As the distance between the side plates constituting the narrow side faces 62N, which serve as the supporting points of the wide side face 62W, and the pressed position becomes shorter, the deflection amount becomes smaller; and as the distance between the side plates constituting the narrow side faces 62N and the pressed position becomes longer, the deflection amount becomes larger as mentioned above. Therefore, when the pressing loads are applied to the battery stacked body 60 composed of the prismatic cells 61 which tend to easily expand due to charging and discharging, it is possible to prevent the central portion of the wide side face 62W from expanding outwards by applying the elastic force to the central portion of the wide side face 62W which tends to expand due to charging and discharging.

When the central portion of the wide side face 62W of the first prismatic cell 61A excluding the portions near the corners of the battery container is pressed as illustrated in Fig. 11(c), expansion deformation of the first prismatic cell 61A as caused by charging and discharging is prevented, the shape of the first prismatic cell 61A is kept equal to that of other prismatic cells 61, and the battery stacked body 60 is pressed uniformly.

On the other hand, when the portions of the wide side face 62W of the first prismatic cell 61A near the corners of the battery container are pressed as illustrated in Fig. 11(d), there is a possibility that the battery container may expand and deform to make the central portion of the wide side face 62W expand towards the end plate 21 along with charging and discharging, thereby causing deterioration of the life time of the battery.

Therefore, when the pressing loads are applied to the prismatic cells 51 which tend to easily expand due to charging and discharging, a proper pressing force can be applied to the battery stacked body 60 by adopting the mode for pressing at the second posture (see Fig. 10(b) and Fig. 11(b)).

The following operations and effects can be obtained according to the aforementioned first embodiment.
(1) The secondary battery module 11 includes: the battery stacked body 60; a pair of end plates 21 and 31 located opposite each other on one stacked-direction side Df and the other stacked-direction side Dr of the battery stacked body 60; a pair of side frames 41 and 51 located opposite each other on one cell-width-direction side W1 and the other cell-width-direction side Wr; and the plate spring 71 that is located between the end surface of the battery stacked body 60 on one stacked-direction side Df and the end plate 21 on one stacked-direction side Df and presses the battery stacked body 60 in the stacked direction. Regarding the pair of side frames 41 and 51 on one cell-width-direction side W1 and the other cell-width-direction side Wr, one end of each side frame 41 or 51 engages with the end plate 21 on one stacked-direction side Df and the other end of each side frame 41 or 51 engages with the end plate 31 on the other stacked-direction side Dr. So, stacked-direction dimensions of the secondary battery module 11 are set by the side frames 41 and 51. Therefore, good dimensional accuracy can be obtained in the stacked direction. As a result, it is possible to suppress variations of the pressing loads acting from the plate spring 71 on the battery stacked body 60.
   On the other hand, the conventional technology described in PTL 1 is configured so that the L-shaped first frame and second frame are used to hold the battery stacked body between them and the distance between the first frame and the second frame is adjusted during an assembly step. So, it is more difficult than this embodiment to obtain good dimensional accuracy and there is a possibility that proper pressing loads may not be obtained by the elastic body. Since the stacked-direction dimension is determined by the side frames 41 and 51 in this embodiment, it is unnecessary to adjust the positions in the stacked-direction dimensions and it is possible to easily obtain good dimensional accuracy and apply proper pressing loads to the battery stacked body 60.
(2) The outside surface of each end plate 21 or 31 is provided with: the protrusions 22L and 32L which protrude in the stacked direction on one cell-width-direction side W1; and the protrusions 32L and 32R which protrude in the stacked direction on the other cell-width-direction side Wr. Regarding the side frame 41 on one cell-width-direction side W1, each of the flanges 43 at both ends to engage with the pair of end plates 21 and 31 is provided with an opening into which the protrusions 22L and 32L on one cell-width-direction side W1 are inserted; and the end edges 42a and 42b of the openings engage with the inner side in the cell-width-direction of the protrusions 22L and 32L on one cell-width-direction side Wl. Regarding the side frame 51 on the other cell-width-direction side Wr, each of the flanges 53 at both ends to engage with the pair of end plates 21 and 31 is provided with an opening into which the protrusions 22R and 32R on the other cell-width-direction side Wr are inserted; and the end edges 52a, 52b of the openings engage with the inner side in the cell-width-direction of the protrusions 22R and 32R on the other cell-width-direction side Wr.
   Since the plate spring 71 is located between the battery stacked body 60 and the end plate 21, the elastic force of the plate spring 71 causes the end plates 21 and 31 to be pressed against the flanges 43 and 53 of the side frames 41 and 51. Accordingly, when performing assembly work, the side frames 41 and 51 can be fixed by the elastic force of the plate spring 71 even before fastening with the fixing screws 10. Since the protrusions 22L, 32L, 22R, and 32R of the end plates 21 and 31 engage with the end edges 42a, 42b, 52a, and 52b, it is possible to prevent the side frames 41 and 51 from being misaligned or coming off and easily position the side frames. As a result, the assembly work can be conducted easily.
(3) The plate spring 71 can be easily retained between the end plate 21 and the end cell holder 81f by inserting the guide pins 86u and 86d through the pin holes 716 in the plate spring 71 and the pin holes 24 in the end plate 21.

### Second Embodiment

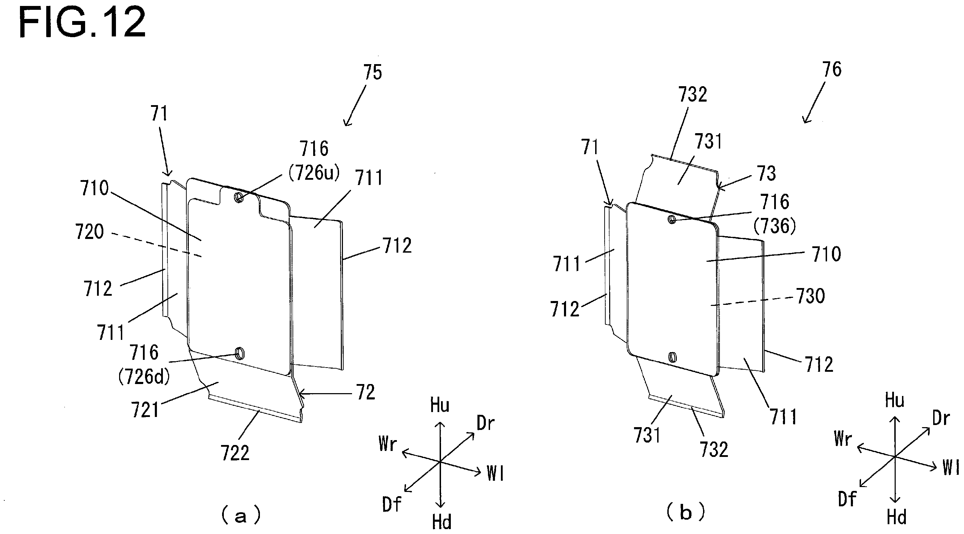

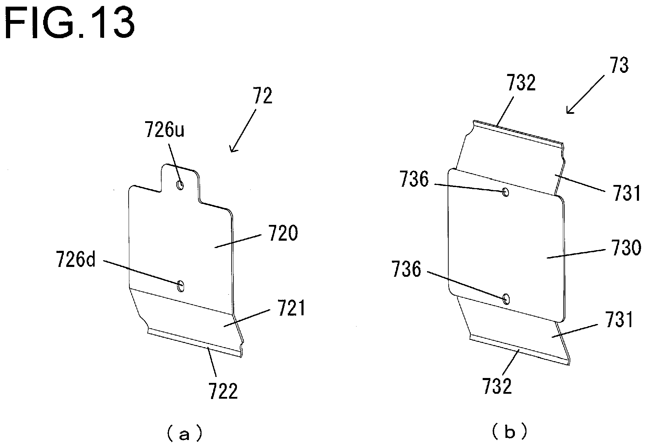

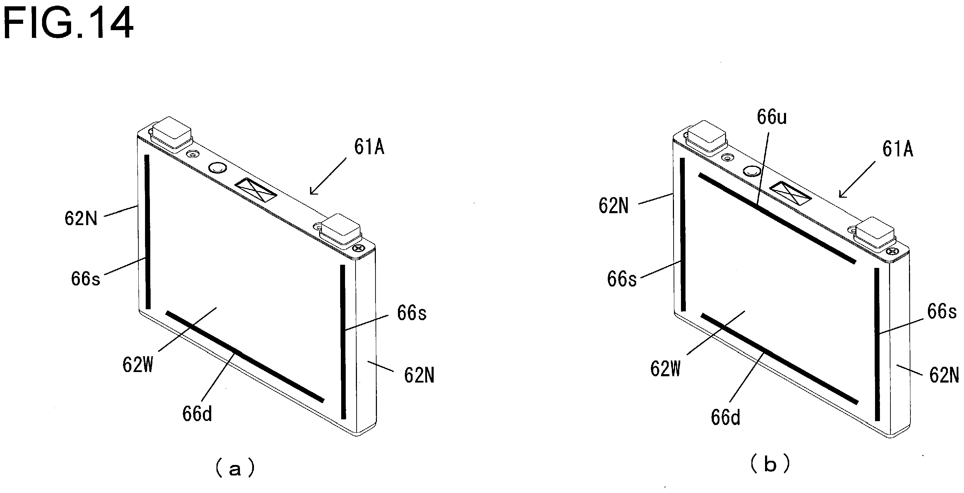

A secondary battery module according to a second embodiment will be explained with reference to Fig. 12(a), Fig. 13(a), and Fig. 14(a). Incidentally, in these drawings, the same reference numerals as those used in the first embodiment are assigned to the same parts as, or parts corresponding to, those in the first embodiment and the differences between the first embodiment and the second embodiment will be mainly explained. Fig. 12(a) is a perspective view of a plate spring assembly 75 provided in the secondary battery module according to the second embodiment and Fig. 13(a) is a perspective view of a plate spring to be combined. Fig. 14(a) is a schematic diagram illustrating pressed positions 66s and 66d of the plate spring assembly 75.

The first embodiment is configured as illustrated in Fig. 9 and Fig. 10(a) so that the single plate spring 71 is used to apply the elastic force to the battery stacked body 60 at two positions near the corners of the battery container, which are both cell-width-direction ends of the wide side face 62W.

On the other hand, the second embodiment is configured so that in addition to both the cell-width-direction ends of the wide side face 62W, its end on the other cell-height-direction side Hd, that is, a position near the corner of the battery container close to the bottom face 62B is also pressed. The plate spring assembly 75 is formed as illustrated in Fig. 12(a) by laying an additional spring 72, which is a plate spring to be combined as illustrated in Fig. 13(a), over the plate spring 71 illustrated in Fig. 9.

Referring to Fig. 12(a) and Fig. 13(a), the additional spring 72 includes: a flat plate part 720 to be brought into contact with the flat plate part 710 of the plate spring 71; and an inclined part 721 extending from an edge of the flat plate part 720 on the other cell-height-direction side Hd. The flat plate part 720 is provided with: a pin hole 726u through which the guide pin 86u formed on the end cell holder 81f on one cell-height-direction side Hu is inserted; and a pin hole 726d through which the guide pin 86d formed on the end cell holder 81f on the other cell-height-direction side Hd is inserted.

The inclined part 721 bends from the edge of the flat plate part 720 on the other cell-height-direction side Hd towards the other stacked-direction side Dr so as to be inclined relative to the flat plate part 720. An end of the inclined part 721 bends towards one stacked-direction side Df to form a bending end 722. The bending end 722 is formed along the bottom face 62B, that is, in parallel with the cell width direction. A surface of the bending end 722 on the other stacked-direction side Dr is formed as a curved contact face to be brought into contact with the end cell holder 81f.

The plate spring 71 and the additional spring 72 are placed one over the other in the stacked direction of the battery stacked body 60 as illustrated in Fig. 12(a) and the flat plate part 720 of the additional spring 72 is in contact with a side of the flat plate part 710 of the plate spring 71 which is the other side of the contact face 710a in contact with the end plate 21. The pair of pin holes 726u and 726d in the additional spring 72 are located over the pair of pin holes 716 in the plate spring 71 and the pair of guide pins 86u and 86d of the end cell holder 81f are inserted through those pin holes, thereby forming the plate spring assembly 75.

The plate spring assembly 75 is placed in an elastically deformed state, that is, in a compressed state so as to shorten the stacked-direction distance between the flat plate parts 710 and 720 and the bending ends 712 and 722 and generates the elastic force towards outside with respect to the stacked direction.

In this way, the first prismatic cell 60A can be pressed at the pressed position 66d near the corner of the wide side face 62W close to the bottom face 62B in addition to the pressed positions 66s near the corners of the wide side face 62W close to the narrow side faces 62N as illustrated in Fig. 14(a) by using the additional spring 72 in combination with the plate spring 71. Incidentally, the pressed positions can be changed by turning the plate spring assembly 75 around and setting it (see Fig. 10(b)).

According to the above-described second embodiment, the similar advantageous effects to those of the first embodiment can be obtained.

### Variation of Second Embodiment

A secondary battery module according to a variation of the second embodiment will be explained with reference to Fig. 12(b), Fig. 13(b), and Fig. 14(b). Incidentally, in these drawings, the same reference numerals as those used in the second embodiment are assigned to the same parts as, or parts corresponding to, those in the second embodiment and the differences between the second embodiment and the variation will be mainly explained. Fig. 12(b) is a perspective view of a plate spring assembly 76 provided in the secondary battery module according to the variation of the second embodiment and Fig. 13(b) is a perspective view of a plate spring to be combined. Fig. 14(b) is a schematic diagram illustrating positions pressed by the plate spring assembly 76.

The second embodiment is configured as illustrated in Fig. 12(a) and Fig. 13(a) so that the plate spring assembly 75 formed by placing the additional spring 72 over the plate spring 71 is used to apply the elastic force to the battery stacked body 60 at three positions, that is, near the corners of the battery container at both cell-width-direction ends of the wide side face 62W and near the corner of the battery container at the end of the wide side face 62W on the other cell-height-direction side Hd.

On the other hand, the variation of the second embodiment is configured as illustrated in Fig. 12(b) and Fig. 13(b) so that the plate spring assembly 76 is formed by placing the additional spring 73, instead of the additional spring 72 of the second embodiment, over the plate spring 71; and a position near the corner of the battery container on one cell-height-direction side Hu, that is, close to the battery lid 63 is also pressed in addition to both the cell-width-direction ends of the wide side face 62W and its end on the other cell-height-direction side Hd. Referring to Fig. 12(b), the plate spring assembly 76 is formed by placing the additional spring 73, which is a plate spring to be combined as illustrated in Fig. 13(b), over the plate spring 71 illustrated in Fig. 9.

Referring to Fig. 12(b) and Fig. 13(b), the additional spring 73 includes: a flat plate part 730 to be brought into contact with the flat plate part 710 of the plate spring 71; and a pair of inclined parts 731 extending from both cell-height-direction edges of the flat plate part 730. The flat plate part 730 at both cell-height-direction ends of the cell-width-direction central position is provided with a pair of pin holes 736 through which the guide pins 86u and 86d of the aforementioned end cell holder 81f are inserted.

Each of the pair of inclined parts 731 bends from both cell-height-direction edges of the flat plate part 730 towards the other stacked-direction side Dr and extends to be inclined relative to the flat plate part 730. The pair of inclined parts 731 is inclined so as to make the cell-height-direction distance between the inclined parts 731 wider towards ends of the inclined parts 731 as seen from one cell-width-direction side W1.

The end of the inclined part 731 bends towards one stacked-direction side Df to form a bending end 732. A pair of bending ends 732 is formed respectively along the battery lid 63 and the bottom face 62B, that is, in parallel with the cell width direction. A surface of the bending end 732 on the other stacked-direction side Dr is formed as a curved contact face to be brought into contact with the end cell holder 81f.

The plate spring 71 and the additional spring 73 are placed one over the other in the stacked direction of the battery stacked body 60 as illustrated in Fig. 12(b) and the flat plate part 730 of the additional spring 73 is in contact with a side of the flat plate part 710 of the plate spring 71 which is the other side of the contact face 710a in contact with the end plate 21. The pair of pin holes 736 in the additional spring 73 are located over the pair of pin holes 716 in the plate spring 71; and the pair of guide pins 86u and 86d of the end cell holder 81f is inserted through those holes, thereby forming the plate spring assembly 76.

The plate spring assembly 76 is placed in an elastically deformed state, that is, in a compressed state so as to shorten the stacked-direction distance between the flat plate parts 710 and 730 and the bending ends 712 and 732 and generates the elastic force towards outside with respect to the stacked direction.

In this way, the first prismatic cell 60A can be pressed at a total of four positions as illustrated in Fig. 14(b), that is, at the pressed positions 66s near the corners of the wide side face 62W close to the narrow side faces 62N, the pressed position 66d near the corner of the wide side face 62W close to the bottom face 62B, and the pressed position 66u near the corner of the narrow side face 62W close to the battery lid 63 by using the combination of the additional spring 73 and the plate spring 71. Incidentally, the pressed positions can be changed by turning the plate spring assembly 76 around and setting it (see Fig. 10(b)).

According to such a variation of the second embodiment, the similar effects to those of the second embodiment can be obtained.

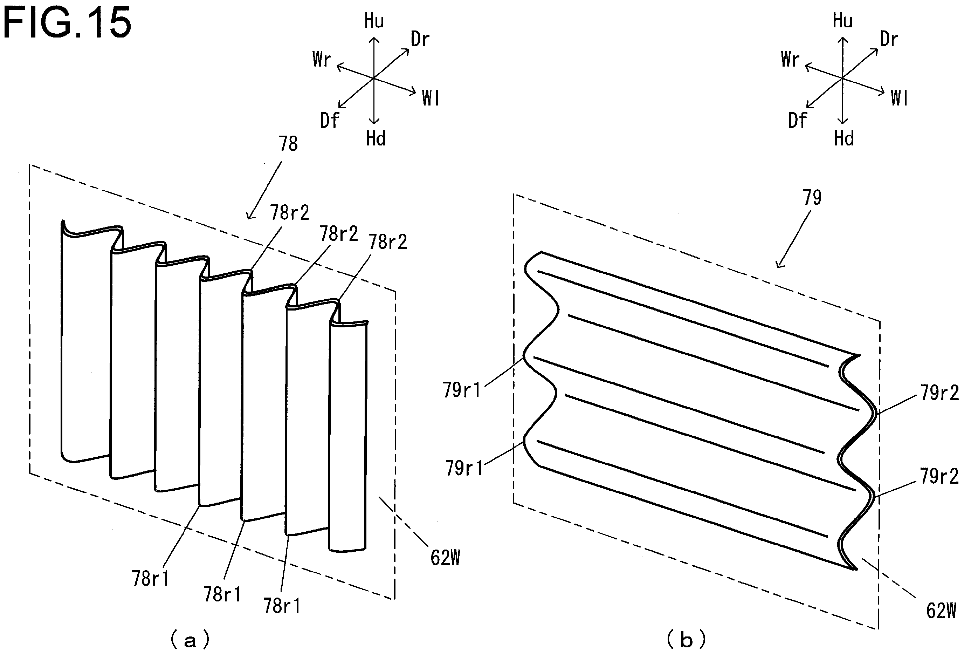

The following variations are also within the scope of the present invention and one or more variations can be combined with the aforementioned embodiments.
(1) The plate spring 71 and the plate spring assemblies 75 and 76 are adopted as the elastic body located between the end surface of the battery stacked body 60 on one stacked-direction side Df and the end plate 21 on one stacked-direction side Df; however, the present invention is not limited to these examples. Any elastic body may be used as long as it presses the battery stacked body 60 towards the stacked direction; and, for example, a continuous-wave-shaped metal plate may be placed between the end cell holder 81f and the end plate 21 as illustrated in Fig. 15(a) and Fig. 15(b).
   The shape of a wave spring 78 illustrated in Fig. 15(a) as seen from one cell-height-direction side Hu is a continuous wave shape, curved surface parts 78r1 formed on its one side are brought into contact with the end plate 21, and curved surface parts 78r2 formed on the other side are brought into contact with the end cell holder 81f. The wave spring 78 is placed in an elastically deformed state so as to be compressed in the stacked direction; and it applies the elastic force via the end cell holder 81f to the wide side face 62W of the first prismatic cell 61A.
   The shape of a wave spring 79 illustrated in Fig. 15(b) as seen from one cell-width-direction side W1 is a continuous wave shape, curved surface parts 79r1 formed on its one side are brought into contact with the end plate 21, and curved surface parts 79r2 formed on the other side are brought into contact with the end cell holder 81f. The wave spring 79 is placed in an elastically deformed state so as to be compressed in the stacked direction; and it applies the elastic force via the end cell holder 81f to the wide side face 62W of the first prismatic cell 61A.
   Even when such a wave spring 78 or 79 is adopted as the elastic body, dimensional accuracy of the distance between the end plate 21 and the end plate 31 can be enhanced by the side frames 41 and 51. So, variations of pressing loads acting from the wave spring 78 or 79 on the battery stacked body 60 can be suppressed.
(2) A cross-sectional shape of the side frame 41 or 51 is not limited to the above-described examples. For example, the cross-sectional shape of the side frame 41 or 51 may be a substantially L shape with only the rib 46 or 56 at the upper end by omitting the rib 46 or 56 at the lower end of the side frame 41 or 51.
(3) The aforementioned embodiments have described the example in which two of each type of the protrusions 22L, the protrusions 22R, the protrusions 32L, and the protrusions 32R are formed respectively; however, the present invention is not limited to this example. For example, one rectangular protrusion extending along the cell height direction may be provided instead of a pair of protrusions 22L.
(4) In the first embodiment, a single plate spring 71 is provided; and in the second embodiment and the variation of the second embodiment, the plate spring assembly 75 or 76 which is configured by laying two plate springs one over the other in the stacked direction is provided; however, the present invention is not limited to these examples. Three or more elastic bodies may be used to press the battery stacked body 60 in the stacked direction.
(5) The elastic body is not limited to the case of a plate spring formed by processing a plate member made of metal. It is possible to adopt various elastic bodies capable of pressing the battery stacked body 60 towards the stacked direction.
(6) The lithium ion secondary batteries were taken as an example of prismatic cells constituting the secondary battery module; however, the present invention is not limited to this example. The present invention can be applied to various prismatic secondary batteries, each of which contains a charging and discharging element such as a nickel-metal hydride battery or the like in a container.

Various embodiments and variations have been explained above, but the present invention is not limited to the content of these embodiments and variations. Other aspects that can be thought of within the scope of technical ideas of the present invention are also included in the scope of the present invention.

## Claims

1. A secondary battery module (11) comprising:
a battery stacked body (60) configured by stacking and placing a plurality of secondary batteries, each having a flat rectangular battery container, so that wide side faces of the secondary batteries, having a large area among side faces of the secondary batteries, are placed opposite each other;
a pair of end plates (21, 31) that is respectively disposed at one stacked-direction side of the battery stacked body (60) and at another stacked-direction side of the battery stacked body so as to face opposite each other;
a pair of side frames (41, 51) that is respectively disposed at one cell-width-direction side and at another cell-width-direction side so as to face opposite each other, a cell width direction being perpendicular to a stacked direction of the battery stacked body (60), and one ends of the side frames (41, 51) on the one cell-width-direction side and the other cell-width-direction side engaging with an end plate on the one stacked-direction side and other ends of the side frames (41, 51) engaging with an end plate on the other stacked-direction side;
an elastic body that is placed between an end surface of the battery stacked body (60) on the one stacked-direction side and the end plate on the one stacked-direction side and presses the battery stacked body (60) in the stacked direction;
protrusions (22L, 22R, 32L, 32R) protruding in the stacked direction are provided on an outside surface of each end plate (21, 31) at the one cell-width-direction side and the other cell-width-direction side;
**characterized in that**:
an opening (42, 43) into which a protrusion (22L, 32L) at the one cell-width-direction side is inserted is formed at each of both ends of the side frame (41, 51) on the one cell-width-direction side to engage with the pair of end plates (21, 31) and an edge (42a, 42b) of the opening engages with an inner side of the cell-width-direction of the protrusion (22L, 32L) on the one cell-width-direction side; and
an opening (52, 53) into which a protrusion (22R, 32R) on the other cell-width-direction side is inserted is formed at each of both ends of the side frame (41, 51) on the other cell-width-direction side to engage with the pair of end plates (21, 31) and an edge (52a, 52b) of the opening engages with an inner side of the cell-width-direction of the protrusion (22R, 32R) on the other cell-width-direction side.

2. The secondary battery module according to claim 1, wherein;
at least one elastic body is provided as the elastic body and the elastic body applies an elastic force to the battery stacked body (60) at least at two positions.

3. The secondary battery module according to claim 1, wherein;
the elastic body is configured to be capable of being set in any one of a mode for pressing at a first posture and a mode for pressing at a second posture, which is different from the first posture; and at the second posture, the elastic body applies an elastic force to the battery stacked body (60) at a position different from that of the first posture.

4. The secondary battery module according to claim 1, wherein;
a plurality of elastic bodies, each corresponding to the elastic body, are provided; and
the plurality of elastic bodies are placed one over another in the stacked direction.

5. The secondary battery module according to claim 1, wherein;
the elastic body is provided so that a position on a secondary battery which is pressed by the elastic body is located in vicinity of a corner of the battery container on the wide side face of the secondary battery.

6. The secondary battery module according to claim 1, wherein;
the elastic body is provided so that a position on a secondary battery which is pressed by the elastic body is located in a central portion excluding vicinity of corners of the battery container on the wide side face of the secondary battery.

7. The secondary battery module according to claim 1, wherein;
the elastic body is of a continuous wave shape.

8. The secondary battery module according to claim 1, wherein;
a pair of guide pins (86a, 86d) that extends in a same direction and is separated from each other is provided on one of a pair of cell holders (81f, 81r) provided at both ends of the battery stacked body (60); and
the elastic body is provided with pin holes (24, 34), into each one of which one of the pair of guide pins (86a, 86d) is inserted.

9. The secondary battery module according to claim 1, wherein;
the elastic body is a plate spring (71).

## Patentansprüche

1. Sekundärbatteriemodul (11), das umfasst:
einen Körper aus gestapelten Batterien (60), der durch Stapeln und Positionieren von mehreren sekundären Batterien konfiguriert ist, die jeweils einen flachen rechteckigen Batteriebehälter besitzen, so dass Flächen der breiten Seiten der sekundären Batterien, die eine große Fläche unter Seitenflächen der sekundären Batterien besitzen, einander gegenüberliegend positioniert sind;
ein Paar Abschlussplatten (21, 31), das jeweils an einer Seite der Stapelrichtung des Körpers aus gestapelten Batterien (60) und an einer anderen Seite der Stapelrichtung des Körpers aus gestapelten Batterien angeordnet ist, um einander gegenüberliegend zugewandt zu sein;
ein Paar Seitenrahmen (41, 51), das jeweils an einer Seite in Breitenrichtung der Zelle und einer anderen Seite in Breitenrichtung der Zelle angeordnet ist, um einander gegenüberliegend zugewandt zu sein, wobei eine Breitenrichtung der Zelle senkrecht zu einer Stapelrichtung des Körpers aus gestapelten Batterien (60) ist und ein Ende der Seitenrahmen (41, 51) auf der einer Seite in Breitenrichtung der Zelle und der anderen Seite in Breitenrichtung der Zelle mit, einer Abschlussplatte auf der einen Seite der Stapelrichtung in Eingriff gelangt und andere Enden der Seitenrahmen (41, 51) mit einer Abschlussplatte auf der anderen Seite der Stapelrichtung in Eingriff gelangen;
ein elastischer Körper, der zwischen einer Stirnfläche des Körpers aus gestapelten Batterien (60) auf der einen Seite der Stapelrichtung und der Abschlussplatte auf der einen Seite der Stapelrichtung positioniert ist und den Körper (60) aus gestapelten Batterien (60) in der Stapelrichtung presst;
wobei Vorsprünge (22L, 22R, 32L, 32R), die in der Stapelrichtung vorstehen, auf einer Außenfläche jeder Abschlussplatte (21, 31) an der einen Seite in Breitenrichtung der Zelle und der anderen Seite in Breitenrichtung der Zelle vorgesehen sind;
**dadurch gekennzeichnet, dass**:
eine Öffnung (42, 43), in die ein Vorsprung (22L, 32L) an der einen Seite in Breitenrichtung der Zelle eingefügt ist, an jedem von beiden Enden des Seitenrahmens (41, 51) auf der einen Seite in Breitenrichtung der Zelle gebildet ist, um mit dem Paar Abschlussplatten (21, 31) in Eingriff zu gelangen, und eine Kante (42a, 42b) der Öffnung mit einer inneren Seite in Breitenrichtung der Zelle des Vorsprungs (22L, 32L) auf der einen Seite in Breitenrichtung der Zelle in Eingriff gelangt; und
eine Öffnung (52, 53), in die ein Vorsprung (22R, 32R) auf der anderen Seite in Breitenrichtung der Zelle eingefügt ist, an jedem von beiden Enden des Seitenrahmens (41, 51) auf der anderen Seite in Breitenrichtung der Zelle gebildet ist, um mit dem Paar Abschlussplatten (21, 31) in Eingriff zu gelangen, und eine Kante (52a, 52b) der Öffnung mit einer inneren Seite in Breitenrichtung der Zelle des Vorsprungs (22R, 32R) auf der anderen Seite in Breitenrichtung der Zelle in Eingriff gelangt.

2. Sekundärbatteriemodul nach Anspruch 1, wobei:
mindestens ein elastischer Körper als der elastische Körper vorgesehen ist und der elastische Körper zumindest an zwei Positionen eine Kraft auf den Körper aus gestapelten Batterien (60) ausübt.

3. Sekundärbatteriemodul nach Anspruch 1, wobei:
der elastische Körper so konfiguriert ist, dass er entweder in eine Betriebsart, um in einer ersten Stellung zu drücken, oder eine Betriebsart, um in einer von der ersten Stellung verschiedenen zweiten Stellung zu drücken, eingestellt werden kann; und der elastische Körper in der zweiten Stellung eine elastische Kraft auf den Körper aus gestapelten Batterien (60) an einer Position, die von der der ersten Stellung verschieden ist, ausübt.

4. Sekundärbatteriemodul nach Anspruch 1, wobei:
mehrere elastische Körper, die jeweils dem elastischen Körper entspre- , chen, vorgesehen sind; und
die mehreren elastischen Körper in der Stapelrichtung übereinander positioniert sind.

5. Sekundärbatteriemodul nach Anspruch 1, wobei:
der elastische Körper so vorgesehen ist, dass sich eine Position auf einer sekundären Batterie, die durch den elastischen Körper gedrückt wird, in der Nähe einer Ecke des Batteriebehälters auf der Seite der breiten Seite der sekundären Batterie befindet.

6. Sekundärbatteriemodul nach Anspruch 1, wobei:
der elastische Körper so vorgesehen ist, dass sich eine Position auf einer sekundären Batterie, die durch den elastischen Körper gedrückt wird, an einem mittleren Abschnitt befindet, der die Nähe von Ecken des Batteriebehälters auf der Fläche der breiten Seite der sekundären Batterie ausschließt.

7. Sekundärbatteriemodul nach Anspruch 1, wobei:
der elastische Körper eine durchgängige Wellenform hat.

8. Sekundärbatteriemodul nach Anspruch 1, wobei:
ein Paar Führungsstifte (86a, 86d), die sich in derselben Richtung erstrecken und voneinander getrennt sind, auf einem eines Paars Zellenhalter (81f, 81r) vorgesehen ist, das an beiden Enden des Körpers aus gestapelten Batterien (60) vorgesehen ist; und
der elastische Körper mit Stiftlöchern (24, 34) ausgestattet ist, in die jeweils einer des Paars Führungsstifte (86a, 86d) eingefügt ist.

9. Sekundärbatteriemodul nach Anspruch 1, wobei:
der elastische Körper eine Federplatte (71) ist.

## Revendications

1. Module de batterie secondaire (11) comprenant :
un corps empilé de batterie (60) configuré en empilant et en plaçant une pluralité de batteries secondaires, ayant chacune un récipient de batterie rectangulaire plat, de sorte que les grandes faces latérales des batteries secondaires, qui ont une plus grande superficie parmi les faces latérales des batteries secondaires, sont placées à l'opposé l'une de l'autre ;
une paire de plaques terminales (21, 31) qui sont respectivement disposées sur un côté, dans la direction de l'empilement, du corps empilé de batterie (60) et un autre côté, dans la direction de l'empilage du corps empilé de batterie de manière à se faire mutuellement face ;
une paire de cadres latéraux (41, 51) qui sont respectivement disposés sur un côté dans la direction en largeur des cellules et sur un autre côté dans la direction en largeur des cellules de manière à se faire mutuellement face,
une direction en largeur des cellules étant perpendiculaire à une direction d'empilage du corps empilé de batterie (60), et une des extrémités des cadres latéraux (41, 51) sur le premier côté dans la direction en largeur des cellules et sur l'autre côté dans la direction en largeur des cellules étant en engagement avec une plaque terminale sur le premier côté dans la direction d'empilement et les autres extrémités des cadres latéraux (41, 51) étant en engagement avec une plaque terminale sur l'autre côté dans la direction d'empilement ;
un corps élastique est placé entre une surface terminale du corps empilé de batterie (60) sur le côté dans la direction d'empilement et la plaque terminale sur le premier côté dans la direction d'empilement, et presse le corps empilé de batterie (60) dans la direction d'empilement ;
des projections (22L, 22R, 32L, 32R) en projection dans la direction d'empilement sont prévues sur une surface extérieure de chaque plaque terminale (21, 31) sur le premier côté dans la direction en largeur des cellules et sur l'autre côté dans la direction en largeur des cellules ;
**caractérisé en ce que**
une ouverture (42, 43) dans laquelle est insérée une projection (22L, 32L) sur le premier côté dans la direction en largeur des cellules est formée à chacune des deux extrémités du cadre latéral (41, 51) sur le premier côté dans la direction en largeur des cellules pour s'engager avec la paire de plaques terminales (21, 31), et une bordure (42a, 42b) de l'ouverture vient en engagement avec un côté intérieur de la direction en largeur des cellules de la projection (22L, 32L) sur le premier côté dans la direction en largeur des cellules ; et
une ouverture (52, 53) dans laquelle est insérée une projection (22R, 32R) sur l'autre côté dans la direction en largeur des cellules est formée à chacune des deux extrémités du cadre latéral (41, 51) sur l'autre côté dans la direction en largeur des cellules pour venir en engagement avec la paire de plaques terminales (21, 31), et une bordure (52a, 52b) de l'ouverture engage un côté intérieur de la direction en largeur des cellules de la projection (22R, 32R) sur l'autre côté dans la direction en largeur des cellules.

2. Module de batterie secondaire selon la revendication 1, dans lequel :
au moins un corps élastique est prévu en tant que le corps élastique, et le corps élastique applique une force élastique sur le corps empilé de batterie (60) au moins à deux positions.

3. Module de batterie secondaire selon la revendication 1, dans lequel :
le corps élastique est configuré pour être capable d'être mis dans un mode quelconque parmi un mode pour le pressage à une première posture et un mode pour le pressage à une seconde posture, différente de la première posture et ; à la seconde posture, le corps élastique applique une force élastique au corps empilé de batterie (60) à une position différente de celle de la première posture.

4. Module de batterie secondaire selon la revendication 1, dans lequel :
une pluralité de corps élastiques, correspondant chacun au corps élastique, sont prévus ; et
la pluralité de corps élastiques sont placés les uns au-dessus des autres dans la direction d'empilement.

5. Module de batterie secondaire selon la revendication 1, dans lequel :
le corps élastique est prévu de telle façon qu'une position sur une batterie secondaire qui est pressée par le corps élastique, est située au voisinage d'un coin du conteneur de batterie sur la face du grand côté de la batterie secondaire.

6. Module de batterie secondaire selon la revendication 1, dans lequel :
le corps élastique est prévu de telle façon qu'une position sur une batterie secondaire, qui est pressée par le corps élastique est située dans une portion centrale à l'exclusion du voisinage des coins du récipient à batterie sur la face du grand côté de la batterie secondaire.

7. Module de batterie secondaire selon la revendication 1, dans lequel :
le corps élastique a une forme en onde continue.

8. Module de batterie secondaire selon la revendication 1, dans lequel :
une paire de broches de guidage (86a, 86d), qui s'étendent dans une même direction et qui sont séparées l'une de l'autre, est prévue sur un porte-cellules d'une paire de portes-cellules (81f, 81c) prévus aux deux extrémités du corps empilé de batterie (60) ; et
le corps élastique est doté de trous pour broche (24, 34), l'une des broches de la paire de broches de guidage (86a, 86b) étant insérée à chaque fois dans l'un des trous pour broche.

9. Module de batterie secondaire selon la revendication 1, dans lequel le corps élastique est un ressort en forme de plaque (71).
